# EUROPÄISCHE PATENTSCHRIFT

(11) **EP 1 659 835 B1**
(45) Veröffentlichungstag und Bekanntmachung des Hinweises auf die Patenterteilung: **30.01.2008**
(21) Anmeldenummer: 05024594.3
(22) Anmeldetag: 10.11.2005
(51) Int. Cl.: H05B 41/22

(54) **Hochdruckentladungslampe mit Impulszündvorrichtung und Betriebsverfahren für eine Hochdruckentladungslampe**
High pressure discharge lamp with impulse starter and operational method for a high pressure lamp
Lamp à décharge haute pression avec un circuit d'amorçage par impulsion et méthode de commande pour une telle lampe

(30) Priorität: 19.11.2004 DE 102004056002
(43) Veröffentlichungstag der Anmeldung: 24.05.2006
(73) Patentinhaber: Patent-Treuhand-Gesellschaft für elektrische Glühlampen mbH, 81543 München (DE)
(72) Erfinder: Hirschmann, Günther, 81735 München (DE); Sießegger, Bernhard, 81539 München (DE)
(74) Vertreter: Raiser, Franz

(56) Entgegenhaltungen:
- DE-A1- 2 717 853
- DE-A1- 3 148 821
- DE-A1- 19 610 385
- US-A- 4 743 810
- US-A- 6 034 477

## Beschreibung

Die Erfindung betrifft eine Hochdruckentladungslampe gemäß dem Oberbegriff des Patentanspruchs 1 sowie ein Betriebsverfahren für eine Hochdruckentladungslampe.

### I. Stand der Technik

Eine derartige Hochdruckentladungslampe ist beispielsweise in der WO 98/18297 offenbart. Diese Offenlegungsschrift beschreibt eine Hochdruckentladungslampe mit einer Zündhilfselektrode und einer im Lampensockel angeordneten Impulszündvorrichtung zum Zünden der Gasentladung in dem Entladungsgefäß der Hochdruckentladungslampe. Die Impulszündvorrichtung und die Betriebsschaltung für die Hochdruckentladungslampe sind mittels eines Transformators galvanisch voneinander getrennt. Sowohl die Impulszündvorrichtung als auch die Betriebsschaltung sind zu ihrer Spannungsversorgung jeweils an eine Sekundärwicklung des Transformators angeschlossen, dessen Primärwicklungen als Bestandteil eines Push-Pull-Wechselrichters ausgebildet sind. Die Abschaltung der Impulszündvorrichtung nach erfolgreicher Zündung der Gasentladung erfolgt mittels eines Halbleiterschalters. Die Druckschrift, DE 2 717 853, offenbart eine Wechselspannungs-Metalldampfentladungslampe, wobei das Entladungsrohr eine äussere Startelektrode besitzt.

### II. Darstellung der Erfindung

Es ist Aufgabe der Erfindung, eine gattungsgemäße Hochdruckentladungslampe mit einer vereinfachten Spannungsversorgung für die Zündvorrichtung bereitzustellen und ein entsprechendes Betriebsverfahren anzugeben.

Diese Aufgabe wird erfindungsgemäß durch die Merkmale des Patentanspruchs 1 gelöst. Besonders vorteilhafte Ausführungen der Erfindung sind in den abhängigen Patentansprüchen beschrieben.

Die erfindungsgemäße Hochdruckentladungslampe besitzt innerhalb ihres Entladungsgefäßes angeordnete Elektroden, die eine Entladungsstrecke definieren, und eine innerhalb ihres Lampensockels angeordnete, als Impulszündvorrichtung ausgebildete Zündvorrichtung zum Zünden der Gasentladung in dem Entladungsgefäß sowie eine außerhalb des Entladungsgefäßes angeordnete Zündhilfselektrode, wobei der Spannungseingang der Impulszündvorrichtung erfindungsgemäß parallel zur Entladungsstrecke der Hochdruckentladungslampe geschaltet ist.

Dadurch kann die Impulszündvorrichtung unmittelbar aus dem Spannungsabfall über der Entladungsstrecke der Hochdruckentladungslampe mit Energie versorgt werden. Eine separate Erzeugung der Versorgungsspannung für die Zündvorrichtung entfällt somit. Außerdem wird kein Schalter zum Deaktivieren der Impulszündvorrichtung nach erfolgreicher Zündung der Gasentladung in der Lampe benötigt, da der Spannungsabfall über der Entladungsstrecke nach erfolgter Zündung der Gasentladung deutlich zurückgeht und damit die an der Impulszündvorrichtung anliegende Spannung nicht mehr zur Erzeugung von Zündspannungsimpulsen ausreicht.

Vorzugsweise ist bei der erfindungsgemäßen Hochdruckentladungslampe der Zündkondensator der Impulszündvorrichtung in einem parallel zur Entladungsstrecke der Hochdruckentladungslampe geschalteten Gleichstrompfad angeordnet. Dadurch wird der Ladestrom für den Zündkondensator unmittelbar aus dem Spannungsabfall über der Entladungsstrecke der Hochdruckentladungslampe generiert. Während der Zündphase der Hochdruckentladungslampe ist die Entladungsstrecke elektrisch isolierend und daher wird der Zündkondensator auf eine ausreichend hohe Spannung aufgeladen, um seine stoßweise Entladung über eine Funkenstrecke oder ein äquivalentes Schwellwertbauteil und die Erzeugung von Zündspannungsimpulsen mittels des Zündtransformators und der Zündhilfselektrode zu ermöglichen. Nach Beendigung der Zündphase ist die Entladungsstrecke der Hochdruckentladungslampe elektrisch leitend und der Spannungsabfall über der Entladungsstrecke entspricht nur noch der Brennspannung der Hochdruckentladungslampe, die zur Erzeugung weiterer Zündspannungsimpulse mittels der Impulszündvorrichtung nicht mehr ausreicht.

Vorteilhafterweise ist in dem Lampensockel der erfindungsgemäßen Hochdruckentladungslampe zusätzlich ein Serienresonanzkreis untergebracht, wobei mindestens ein elektrisches Bauteil, das als Bestandteil des Serienresonanzkreises ausgebildet ist, beispielsweise die Resonanzkapazität oder die Resonanzinduktivität, parallel zur Entladungsstrecke geschaltet ist. Mittels des Serienresonanzkreises und des vorgenannten, parallel zur Entladungsstrecke geschalteten elektrischen Bauteils wird zumindest während der Zündphase der Hochdruckentladungslampe eine resonanzüberhöhte Wechselspannung generiert, die über der Entladungsstrecke abfällt und damit auch an dem Spannungseingang der Impulszündvorrichtung anliegt. Dadurch können die elektrischen Kontakte der Hochdruckentladungslampe sowie die elektrischen Zuleitungen zu der Hochdruckentladungslampe für geringere Spannungen konfektioniert werden, da alle Hochspannung führenden elektrischen Komponenten in dem Lampensockel untergebracht sind. Der Serienresonanzkreis gewährleistet ferner eine sichere Übernahme, das heißt, einen sicheren Übergang vom Zeitpunkt des ersten Durchbruchs der Entladungsstrecke zwischen den beiden Elektroden der Hochdruckentladungslampe bis sich eine Bogenentladung mit thermisch Elektronen emittierender Kathode einstellt. Die Übernahme wird auch als glow-to-arc-transition bezeichnet.

Vorteilhafterweise ist gemäß einem bevorzugten Ausführungsbeispiel der Erfindung auch ein Gleichspannungstrennkondensator vorgesehen, um den Natriumverlust im Entladungsplasma bedingt durch die Diffusion von Natriumionen zur Entladungsgefäßwand zu reduzieren. Die Kapazität des Gleichspannungstrennkondensators wird dabei so dimensioniert, dass einerseits die Zündhilfselektrode mit einer ausreichend hohen Spannung zum Zünden der Gasentladung beaufschlagt wird und andererseits die vorgenannte Natriumdiffusion in hinreichendem Maß reduziert wird. Bei zu gro-βer Kapazität oder zu hohem Leckstrom des Gleichspannungstrennkondensators wird keine ausreichende Reduktion der Natriumdiffusion erreicht und bei zu kleiner Kapazität kann die Zündhilfselektrode nicht mit ausreichend hoher Spannung zum Zünden der Gasentladung beaufschlagt werden. Der Gleichspannungstrennkondensator ist vorzugsweise zwischen die Sekundärwicklung des Zündtransformators und die Zündhilfselektrode geschaltet.

### III. Beschreibung des bevorzugten Ausführungsbeispiels

Nachstehend wird die Erfindung anhand eines bevorzugten Ausführungsbeispiels näher erläutert. Es zeigen:
- Figur 1: Eine schematische Darstellung einer Schaltskizze der erfindungsgemäßen Hochdruckentladungslampe mit Impulszündvorrichtung
- Figur 2: Die Schaltskizze aus Figur 1 mit Details der Impulszündvorrichtung
- Figur 3: Eine schematische Darstellung einer Schaltskizze des ersten Ausführungsbeispiels der erfindungsgemäßen Hochdruckentladungslampe mit Impulszündvorrichtung
- Figur 4: Eine schematische Darstellung einer Schaltskizze des zweiten Ausführungsbeispiels der erfindungsgemäßen Hochdruckentladungslampe mit Impulszündvorrichtung
- Figur 5: Eine Seitenansicht der Hochdruckentladungslampe gemäß dem bevorzugten Ausführungsbeispiel der Erfindung in schematischer Darstellung
- Figur 6: Eine schematische Darstellung einer Schaltskizze des dritten Ausführungsbeispiels der erfindungsgemäßen Hochdruckentladungslampe mit Impulszündvorrichtung

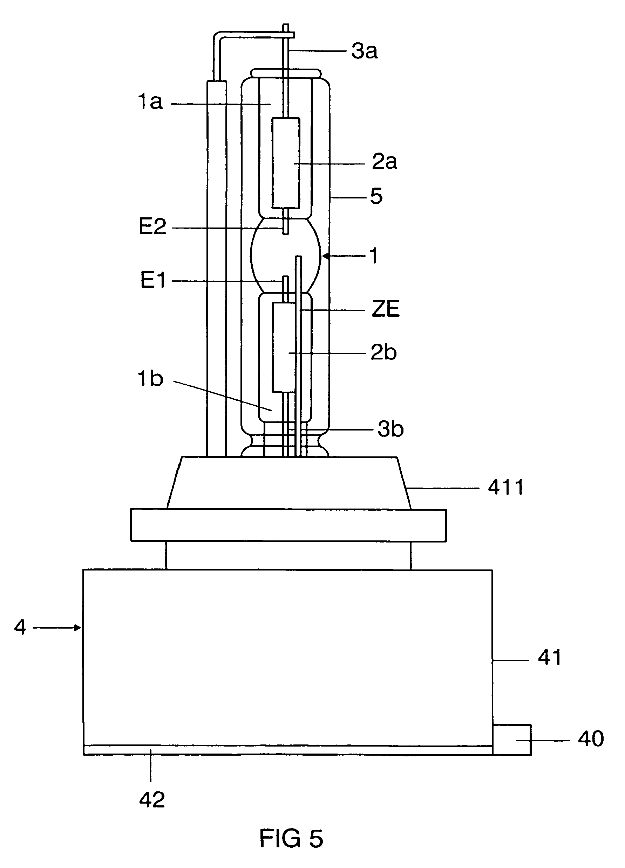

Bei der in Figur 5 schematisch dargestellten Hochdruckentladungslampe gemäß des bevorzugten Ausführungsbeispiels der Erfindung handelt es sich um eine Halogen-Metalldampf-Hochdruckentladungslampe für einen Kraftfahrzeugscheinwerfer.

Diese Hochdruckentladungslampe La besitzt ein Entladungsgefäß 1 aus Quarzglas, in dem eine ionisierbare Füllung gasdicht eingeschlossen ist. Die ionisierbare Füllung enthält Xenon und Metallhalogenidverbindungen, vorzugsweise Jodide der Metalle Natrium, Scandium, Zink und Indium und ionisierbare Füllung enthält vorzugsweise kein Quecksilber. Der Xenon-Kaltfülldruck beträgt ca. 10 bar. Die beiden Enden 1a, 1b des Entladungsgefäßes 1 sind jeweils mittels einer Molybdänfolien-Einschmelzung 2a, 2b abgedichtet. Im Innenraum des Entladungsgefäßes 1 befinden sich zwei Elektroden E1, E2, zwischen denen sich während des Lampenbetriebes der für die Lichtemission verantwortliche Entladungsbogen ausbildet. Diese Hauptelektroden E1, E2 sind jeweils über eine der Molybdänfolien-Einschmelzungen 2a, 2b elektrisch leitend mit einer aus dem Entladungsgefäß 1 herausgeführten Stromzuführung 3a, 3b verbunden. Das Entladungsgefäß 1 wird von einem gläsernen Außenkolben 5 umhüllt. Die Zündhilfselektrode ZE wird hier bei diesem Ausführungsbeispiel der Erfindung von einer dünnen metallischen Beschichtung auf der inneren Oberfläche des Außenkolbens 5 gebildet. Alternativ kann diese Beschichtung aber auch auf der Außenseite des Entladungsgefäßes 1 angebracht sein. Die dünne metallische Beschichtung ZE besitzt die Form eines lang gestreckten Streifens, der sich vom sockelnahen Ende des Außenkolbens 5 ungefähr bis auf die Höhe des Entladungsgefäßmittelpunktes erstreckt. Die Lampengefäße 1, 5 sind im aus Kunststoff bestehenden Oberteil 411 eines Lampensockels 4 fixiert. Der quaderförmige Teil des Lampensockels 4 ist von einem zweiteiligen metallischen Gehäuse 41, 42 umgeben, das zur elektromagnetischen Abschirmung der im Innenraum des Lampensockels 4 untergebrachten Impulszündvorrichtung dient. Der elektrische Anschluss 40 der Hochdruckentladungslampe La dient zur Spannungsversorgung der Hochdruckentladungslampe und der im Lampensockel 4 angeordneten Impulszündvorrichtung. Der elektrische Anschluss 40 ist über ein abgeschirmtes Verbindungskabel (nicht abgebildet) mit dem Betriebsgerät EVG (nicht abgebildet) für die Hochdruckentladungslampe verbunden. Das Abschirmgeflecht des Verbindungskabels ist mit dem schaltungsinternen Massepotential des Betriebsgerätes und über einen Kontakt des elektrischen Anschlusses 40 mit dem Metallgehäuse 41, 42 verbunden, so dass das Metallgehäuse 41, 42 ebenfalls auf Massepotential liegt.

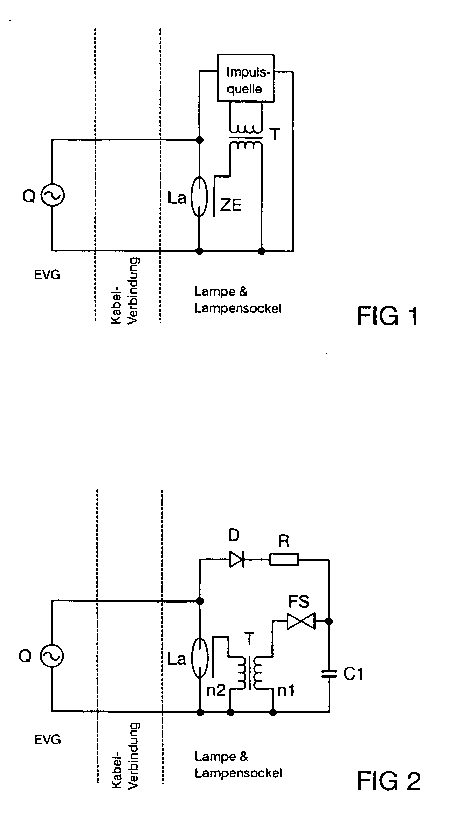

In der Figur 1 ist eine schematische Schaltskizze der erfindungsgemäßen Hochdruckentladungslampe, der im Lampensockel 4 angeordneten Impulszündvorrichtung (in Figur 1 als Impulsquelle bezeichnet) und des Betriebsgerätes EVG dargestellt. Das Betriebsgerät EVG dient als Wechselspannungsquelle Q für die Hochdruckentladungslampe und die im Lampensockel 4 untergebrachte Impulszündvorrichtung. Das Betriebsgerät EVG ist über ein abgeschirmtes Verbindungskabel (nicht abgebildet) mit dem elektrischen Anschluss 40 der Eiochdruckentladungslampe verbunden, so dass die Elektroden E1, E2 der Hochdruckentladungslampe La und der Spannungseingang der Impulszündvorrichtung (Impulsquelle) mit der von dem Betriebsgerät EVG erzeugten Wechselspannung beaufschlagt werden. Der Spannungseingang der Impulszündvorrichtung ist parallel zu der von den Elektroden E1, E2 definierten Entladungsstrecke der Hochdruckentladungslampe geschaltet. Die Sekundärwicklung n2 des Impulstransformators T der Impulszündvorrichtung ist mit der Zündhilfselektrode ZE der Hochdruckentladungslampe La verbunden.

In der Figur 2 sind Details der Impulszündvorrichtung (Impulsquelle) dargestellt. Die von der Wechselspannungsquelle Q bereitgestellte Wechselspannung wird dem Spannungseingang der Impulszündvorrichtung zugeführt und mittels der Diode D gleichgerichtet, um über den Widerstand R den Zündkondensator C1, der in einem Gleichstrompfad parallel zur Entladungsstrecke der Hochdruckentladungslampe La geschaltet ist, aufzuladen. Parallel zu dem Zündkondensator C 1 sind die Funkenstrecke FS und die Primärwicklung n1 des Zündtransformators T geschaltet. Erreicht die Spannung an dem Zündkondensator C1 die Durchbruchsspannung der Funkenstrecke FS, so entlädt sich der Zündkondensator C1 über die Funkenstrecke FS und die Primärwicklung nl. In der Sekundärwicklung n2 des Zündtransformators T, die mit der Zündhilfselektrode ZE verbunden ist, werden dadurch Hochspannungsimpulse induziert, die der Zündhilfselektrode ZE zugeführt werden und zum Zünden der Gasentladung in dem Entladungsgefäß 1 der Hochdruckentladungslampe führen.

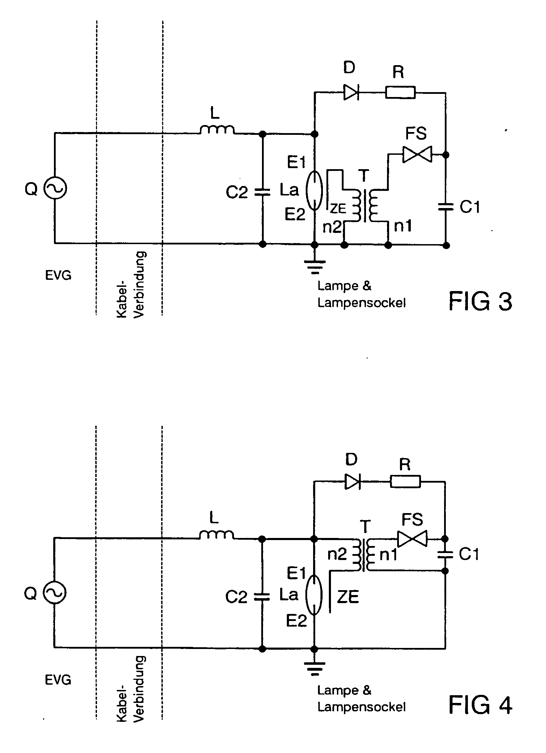

In der Figur 3 ist die erste Ausführungsform der erfindungsgemäßen Hochdruckentladungslampe La inklusive der im Lampensockel 4 untergebrachten Bauteile D, R, FS, C1, T der Impulszündvorrichtung und eines Serienresonanzkreises L, C2 schematisch dargestellt. Die Bauteile L, C2 des Serienresonanzkreises sind ebenfalls im Lampensockel 4 untergebracht. Die Resonanzkapazität C2 ist parallel zur Entladungsstrecke der Hochdruckentladungslampe La geschaltet. Ein erster Anschluss der Sekundärwicklung n2 des Zündtransformators T ist mit dem schaltungsinternen Massebezugspotential verbunden. Der zweite Anschluss der Sekundärwicklung n2 des Zündtransformators T ist mit der Zündhilfselektrode ZE verbunden. Während der Zündphase der Hochdruckentladungslampe La wird der Serienresonanzkreis L. C2 in Resonanz betrieben, so dass an der Resonanzkapazität C2 und damit auch über der Entladungsstrecke der Hochdruckentladungslampe La sowie an dem Spannungseingang der Impulszündvorrichtung eine resonanzüberhöhte Wechselspannung bereitgestellt wird, die eine um den Faktor 2 bis 10 höhere Amplitude als die von der Wechselspannungsquelle Q generierte Wechselspannung besitzt. Mit Hilfe der Bauteile D, R, FS, Cl, T der Impulszündvorrichtung werden daraus Hochspannungsimpulse für die Zündhilfselektrode mit Spannungen im Bereich von ca. 5 kV bis 30 kV erzeugt. Eine geeignete Dimensionierung der elektrischen Bauteile der Impulszündvorrichtung und des Serienresonanzkreises zum Erzeugen einer Zündspannung von ca. 30 kV bzw. einer Zündspannung von ca. 5 kV ist in der Tabelle 1 bzw. 2 offenbart.

Bei dem Betriebsgerät EVG handelt es sich um einen Spannungswandler, der aus der Bordnetzspannung des Kraftfahrzeugs eine nahezu sinusförmige Wechselspannung mit einer Amplitude von ca. 100 V bis 500 V und einer Frequenz von ca. 2,6 MHz während der Zündphase der Hochdruckentladungslampe sowie einer Frequenz von ca. 1 MHz nach Beendigung der Zündphase generiert.

Das in der Figur 4 schematisch dargestellte zweite Ausführungsbeispiel der Erfindung unterscheidet sich von dem in Figur 3 abgebildeten Ausführungsbeispiel nur dadurch, dass der erste Anschluss der Sekundärwicklung n2 des Zündtransformators T mit der auf hohem elektrischen Potential befindlichen Elektrode E1 und nicht mit dem schaltungsinternen Massebezugspotential verbunden ist. In allen anderen Details stimmen die in den Figuren 3 und 4 dargestellten Ausführungsbeispiele überein. Daher wurden in diesen Figuren identische Bauteile mit denselben Bezugszeichen versehen.

Nach erfolgter Zündung der Gasentladung in dem Entladungsgefäß 1 der Hochdruckentladungslampe La bildet die nun leitfähige Entladungsstrecke zwischen den beiden Elektroden E1 , E2 einen Nebenschluss zu der Resonanzkapazität C2 und dem Spannungseingang der Impulszündvorrichtung, so dass die Spannung über der Entladungsstrecke und damit auch am Spannungseingang der Impulszündvorrichtung deutlich geringere Werte annimmt. Dadurch wird die Durchbruchsspannung der Funkenstrecke FS an dem Zündkondensator C 1 nicht mehr erreicht und die Impulszündvorrichtung generiert keine weitere Zündimpulse für die Hochdruckentladungslampe La. Die Abschaltung der Impulszündvorrichtung erfolgt somit ohne weiteren Bauelementeaufwand.

Zur Spannungsversorgung der Hochdruckentladungslampe La und der im Lampensockel 4 untergebrachten Impulszündvorrichtung genügt eine Zwei-Leiterverbindung zwischen dem Betriebsgerät EVG und dem Anschluss 40 der Hochdruckentladungslampe La, da die Impulszündvorrichtung direkt aus der an der Hochdruckentladungslampe anliegenden Wechselspannung versorgt wird.

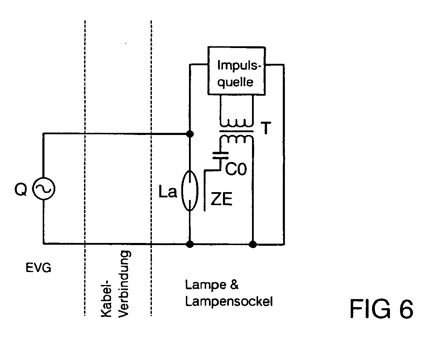

In Figur 6 ist ein weiteres Ausführungsbeispiel der Erfindung dargestellt, das sich von dem in Figur 1 abgebildeten ersten Ausführungsbeispiel der Erfindung nur durch den Gleichspannungstrennkondensator C0 unterscheidet, der zwischen die Sekundärwicklung n2 des Zündtransformators T und die Zündhilfselektrode ZE geschaltet ist. Die Kapazität des Kondensators C0 kann in weiten Grenzen frei gewählt werden, ohne einen nennenswerten Einfluss auf den Zündvorgang auszuüben. Vorzugsweise wird der Kondensator C0 so dimensioniert, dass der Spannungsabfall am Kondensator C0 während des Zündvorgangs kleiner als die sich zwischen der Zündhilfselektrode ZE und den beiden Elektroden der Hochdruckentladungslampe La einstellenden Spannungen ist. Es genügen daher sehr kleine Kapazitätswerte für den Kondensator C0, beispielsweise 33 pF. Aber auch deutlich größere Werte für die Kapazität des Kondensators C0 wie etwa 10 nF sind möglich. Der Gleichspannungstrennkondensator C0 kann analog dazu auch in die Schaltungsanordnungen gemäß der Figuren 2 bis 4 integriert werden. Er verhindert einen Gleichstromfluss über die Zündhilfselektrode ZE und trägt zur Reduktion des durch die Natriumdiffusion bedingten Natriumverlustes im Entladungsgefäß der Hochdruckentladungslampe La bei. Die ionisierbare Füllung im Entladungsgefäß der Hochdruckentladungslampe La enthält nämlich neben Xenon auch Halogenide der Metalle Natrium, Scandium, Zink und Indium.

**Tabelle 1: Dimensionierung der in den Figuren 3 und 4 abgebildeten elektrischen Bauteile zum Erzeugen einer Zündspannung von ca. 30 kV**

| | |
|---|---|
| C1 | 10 nF |
| C2 | 120 pF |
| D | BY505 |
| FS | 2000 V |
| L | 30 µH |
| R | 33 kOhm |
| T | n1 = 10 Windungen, n2 = 190 Windungen |

**Tabelle 2: Alternative Dimensionierung der in den Figuren 3 und 4 abgebildeten elektrischen Bauteile zum Erzeugen einer Zündspannung von ca. 5 kV**

| | |
|---|---|
| C1 | 33 nF |
| C2 | 120 pF |
| D | zwei USIM in Reihe |
| FS | 800 V |
| L | 30 µH |
| R | 10 kOhm |
| T | n1 = 10 Windungen, n2 = 75 Windungen |

## Patentansprüche

1. Hochdruckentladungslampe mit innerhalb ihres Entladungsgefäßes (1) angeordneten Elektroden (E1, E2), die eine Entladungsstrecke für eine Gasentladung in dein Entladungsgefäß (1) definieren, und mit einer innerhalb des Lampensockels (4) der Hochdruckentladungslampe (La) angeordneten, als Impulszündvorrichtung ausgebildeten Zündvorrichtung zum Zünden der Gasentladung in dem Entladungsgefäß (1) sowie mit einer außerhalb ihres Entladungsgefäßes (1) angeordneten, an die Impulszündvorrichtung gekoppelten Zündhilfselektrode (ZE), wobei der Spannungseingang der Impulszündvorrichtung parallel zu der Entladungsstrecke der Hochdruckentladungslampe (La) geschaltet ist,
**dadurch gekennzeichnet, dass** der Zündkondensator (C1) der Impulszündvorrichtung in einem parallel zur Entladungsstrecke der Hochdruckentladungslampe (La) geschalteten Gleichstrompfad angeordnet ist.

2. Hochdruckentladungslampe nach Anspruch 1, **dadurch gekennzeichnet, dass** parallel zur Entladungsstrecke mindestens ein elektrisches Bauteil (C2 oder L) geschaltet ist, das als Bestandteil eines Serienresonanzkreises (L, C2) ausgebildet ist.

3. Hochdruckentladungslampe nach Anspruch 1, **dadurch gekennzeichnet, dass** ein Gleichspannungstrennkondensator (C0) vorgesehen ist.

4. Verfahren zum Betreiben einer Hochdruckentladungslampe, wobei die zum Zünden der Gasentladung in dem Entladungsgefäß (1) der Hochdruckentladungslampe (La) erforderliche Zündspannung mit Hilfe einer Impulszündvorrichtung generiert wird, die eine außerhalb des Entladungsgefäßes (1) angeordnete Zündhilfselektrode (ZE) der Hochdruckentladungslampe (La) während der Zündphase mit Spannungsimpulsen beaufschlagt, wobei die Spannung über der Entladungsstrecke der Hochdruckentladungslampe (La) der Impulszündvorrichtung als Versorgungsspannung zugeführt wird,
**dadurch gekennzeichnet, dass** aus der Spannung über der Entladungsstrecke der Hochdruckentladungslampe (La) ein Gleichstrom zum Aufladen des Zündkondensators (C1) der Impulszündvorrichtung erzeugt wird.

5. Verfahren nach Anspruch 4, **dadurch gekennzeichnet, dass** die Entladungsstrecke der Hochdruckentladungslampe (La) nach dem Zünden der Gasentladung in dem Entladungsgefäß (1) einen Nebenschluss zu dem Zündkondensator (C1) bildet.

6. Verfahren nach Anspruch 4, **dadurch gekennzeichnet, dass** über der Entladungsstrecke der Hochdruckentladungslampe (La) zumindest während der Zündphase der Hochdruckentladungslampe (La) eine resonanzüberhöhte Wechselspannung bereitgestellt wird.

## Claims

1. High-pressure discharge lamp having electrodes (E1, E2) arranged inside a discharge vessel (1) which define a discharge path of a gas discharge in the discharge vessel (1), and having a starting device, arranged inside the lamp base (4) for the high-pressure discharge lamp (La) and designed as a pulse starting device, for starting the gas discharge in the discharge vessel (1), and having, arranged outside its discharge vessel (1), an auxiliary starting electrode (ZE) coupled to the pulse starting device, in which the voltage input of the pulse starting device is connected in parallel with the discharge path of the high-pressure discharge lamp (La), **characterized in that** the starting capacitor (C1) of the pulse starting device is arranged in a DC path connected in parallel with the discharge path of the high-pressure discharge lamp (La) .

2. High-pressure discharge lamp according to claim 1, **characterized in that** connected in parallel with the discharge path is at least one electric component (C2 or L) that is designed as a constituent of a series resonant circuit (L, C2).

3. High-pressure discharge lamp according to claim 1, **characterized in that** a DC isolating capacitor (C0) is provided.

4. Method for operating a high-pressure discharge lamp, the starting voltage required to start the gas discharge in the discharge vessel (1) of the high-pressure discharge lamp (La) being generated with the aid of a pulse starting device that applies voltage pulses during the starting phase to an auxiliary starting electrode (ZE), arranged outside the discharge vessel (1), of the high-pressure discharge lamp (La), in which the voltage is fed as supply voltage to the pulse starting device via the discharge path of the high-pressure discharge lamp (La), **characterized in that** a direct current for charging to charge the starting capacitor (C1) of the pulse starting device is generated from the voltage across the discharge path of the high-pressure discharge lamp (La).

5. Method according to claim 4, **characterized in that** the discharge path of the high-pressure discharge lamp (La) forms a bypass to the starting capacitor (C1) after the starting of the gas discharge in the discharge vessel (1).

6. Method according to claim 4, **characterized in that** a resonant AC voltage peak is provided via the discharge path of the high-pressure discharge lamp (La) at least during the starting phase of the high-pressure discharge lamp (La).

## Revendications

1. Lampe à décharge à haute pression ayant des électrodes (E1, E2), qui sont placées à l'intérieur de son enceinte de décharge (1) et qui définissent une voie de décharge pour une décharge gazeuse dans l'enceinte de décharge (1), et un dispositif d'amorçage, qui est placé à l'intérieur de la douille (4) de la lampe à décharge à haute pression (La), qui est conçu comme un dispositif d'amorçage à impulsions et qui est destiné à l'amorçage de la décharge gazeuse dans l'enceinte de décharge (1), ainsi qu'une électrode auxiliaire d'amorçage (ZE), qui est placée à l'extérieur de son enceinte de décharge (1) et qui est couplée au dispositif d'amorçage à impulsions, l'entrée de tension du dispositif d'amorçage à impulsions étant montée en parallèle avec la voie de décharge de la lampe à décharge à haute pression (La),
**caractérisée par le fait que** le condensateur d'amorçage (C1) du dispositif d'amorçage à impulsions est placé dans un trajet de courant continu monté en parallèle avec la voie de décharge de la lampe à décharge à haute pression (La).

2. Lampe à décharge à haute pression selon la revendication 1, **caractérisée par le fait qu'**au moins un composant électrique (C2 ou L), qui fait partie d'un circuit résonnant série (L, C2), est monté en parallèle avec la voie de décharge.

3. Lampe à décharge à haute pression selon la revendication 1, **caractérisée par le fait qu'**il est prévu un condensateur de coupure de tension continue (C0).

4. Procédé pour faire fonctionner une lampe à décharge à haute pression, dans lequel la tension d'amorçage nécessaire à l'amorçage de la décharge gazeuse dans l'enceinte de décharge (1) de la lampe à décharge à haute pression (La) est produite à l'aide d'un dispositif d'amorçage à impulsions qui fournit des impulsions de tension à une électrode auxiliaire d'amorçage (ZE), appartenant à la lampe à décharge à haute pression (La) et placée à l'extérieur de l'enceinte de décharge (1), pendant la phase d'amorçage, la tension sur la voie de décharge de la lampe à décharge à haute pression (La) étant appliquée comme tension d'alimentation au dispositif d'amorçage à impulsions,
**caractérisé par le fait qu'**un courant continu pour le chargement du condensateur d'amorçage (C1) du dispositif d'amorçage à impulsions est produit à partir de la tension sur la voie de décharge de la lampe à décharge à haute pression (La).

5. Procédé selon la revendication 4, **caractérisé par le fait que**, après l'amorçage de la décharge gazeuse dans l'enceinte de décharge (1), la voie de décharge de la lampe à décharge à haute pression (La) forme une dérivation par rapport au condensateur d'amorçage (C1).

6. Procédé selon la revendication 4, **caractérisé par le fait qu'**une tension alternative à résonance amplifiée par résonance est fournie par l'intermédiaire de la voie de décharge de la lampe à décharge à haute pression (La) au moins pendant la phase d'amorçage de la lampe à décharge à haute pression (La).
